# EUROPEAN PATENT APPLICATION

(11) **EP 2 541 207 A1**
(43) Date of publication of application: **02.01.2013**
(21) Application number: 11172364.9
(22) Date of filing: 01.07.2011
(51) Int. Cl.: G01C 21/36

(54) **Vehicle navigation device and method**

(71) Applicant: Harman Becker Automotive Systems GmbH, 76307 Karlsbad (DE)
(72) Inventor: Spindler, CC., 76135 Karlsruhe (DE); Ivanov, Vladimir, 81375 München (DE); Fischer, Martin, 80805 München (DE); Kunath, Peter, 80999 München (DE)
(74) Representative: Sticht, Andreas

(57) **Abstract**

In a database usable for a navigation device, object data units comprising information for a three-dimensional displaying of objects like buildings are provided. At least one of the object data units comprises an adjustable height parameter for adjusting a height of the corresponding object when displayed.

## Description

### Technical Field

The invention relates to a vehicle navigation device comprising a database storing object data units and to a method of processing data stored in a map database.

### Background

Navigation devices are known which determine a route from a starting point to a destination using map data. Generally, these navigation devices may perform a search for a route which minimizes a cost function. The cost function may represent travel time, distance or fuel costs associated with the route, or any other suitable quantity to be minimized. The route which is optimum may depend on the activation of prefer or avoid options. Prefer and avoid options for highways, ferries or tunnels may be provided.

In addition to route determination, navigation devices may also provide route guidance functions via a user interface. The provision of guidance information may involve the generation of optical or audio output which provides information on a portion of a road network surrounding the vehicle, possibly combined with optical or audio directions to a driver.

The provision and use of a map database which allow data to be used efficiently for route search and route guidance may represent a considerable challenge. For illustration, for route search, information on the fine scale structure of the road network is usually not required for locations remote from both the starting point and destination. However, information on at least certain types of roads, such as highways, at locations remote from both the starting point and destination will be required for a route search. By contrast, guidance functions may require information only in an area surrounding the vehicle, but to a greater level of detail.

For the generation of optical output, for example on a display screen of the navigation device, for providing the above-mentioned route guidance functions in modern navigation devices at least in some modes a surrounding of the navigation device is displayed in a perspective view, i.e. a 3D-view. With such three-dimensional views, care has to be taken to display objects like buildings on the correct height level, for example such that the object does not float above the ground or look like it is sunk into the ground, for all levels of detail which are desired.

Accordingly, there is a need to provide vehicle navigation devices and methods which assist in displaying objects correctly.

### Summary

This need is addressed by devices and methods as recited in the independent claims. The dependent claims define further embodiments.

According to an aspect, a vehicle navigation device comprises a database, the database comprising object data units comprising information for a perspective display of associated respective objects, wherein at least one of the object data units comprises an adjustable height parameter for adjusting a height of the respective object. The vehicle navigation device furthermore comprises a processing unit configured to cause an output interface like a display to display an object based on a corresponding one of the object data units and the adjustable height parameter.

The processing device may further be configured to adjust the adjustable height parameter of an object data unit based on a height of a ground level at a location where the object is to be displayed. The ground level may depend on a level of detail to be displayed. The database may be a map database comprising a plurality of logical layers, the object data units being associated with one of the layers, for example a guidance layer.

According to another aspect, a method is provided, comprising:
providing a database, the database comprising object data units comprising information for perspective displaying of associated objects, at least some of the object data units comprising an adjustable height parameter for adjusting a height of the respective object,
identifying at least one object to be displayed, and
displaying the object based on the associated object data unit.

The method may further comprise determining a position, and identifying the object to be displayed depending on the position.

The method may further comprise adjusting the adjustable height parameter of an object data unit of an object data unit of said object data units associated with said object to be displayed.

### Brief description of the drawings

The foregoing and other features of embodiments will become more apparent from the following detailed description of embodiments when read in conjunction with the accompanying drawings.
Fig. 1 is a schematic block diagram of a navigation device according to an embodiment.
Fig. 2 is a schematic representation of a map database according to an embodiment.
Fig. 3 is a schematic representation of an object data unit according to an embodiment.
Fig. 4 is a schematic diagram showing height adjustment of an object.
Fig. 5 represents a flow-chart illustrating a method according to an embodiment.

### Detailed description

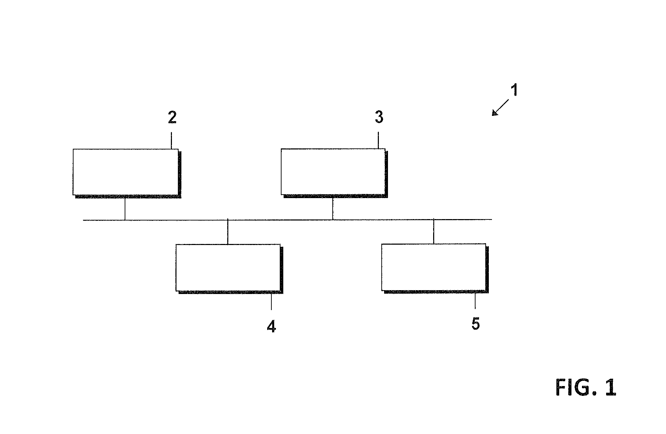

Fig. 1 schematically illustrates a vehicle navigation device 1 according to an embodiment. The navigation device 1 comprises a processing unit 2 controlling the operation of the navigation device 1, e.g. according to control instructions stored in a memory. The processing unit 2 may comprise a central processing unit, for example in form of one or more microprocessors, digital signal processors or application-specific integrated circuits. The navigation device 1 further includes a map database stored in a memory 3. The memory 3 may comprise any one, or any combination, of various types of memory, such as random access memory, flash memory or a hard drive, but also removable memories such as a compact disk (CD), a DVD, a memory card or the like. The navigation device 1 also includes an output interface 4 for outputting guidance information to a user. The output interface 4 may include an optical output device, an audio output device, or a combination thereof. The navigation device 1 also includes an input interface 5 which allows a user to set options. In particular, the input interface 5 may allow a user to set prefer or avoid options for route search.

The navigation device may include additional components, such as a position sensor and/or a wireless receiver and/or a vehicle interface. The position sensor may be adapted to determine the current position of the vehicle in which the navigation device 1 is installed. The position sensor may comprise a GPS (Global Positioning System) sensor, a Galileo sensor, a position sensor based on mobile telecommunication networks and the like. The wireless receiver may be configured to receive information for updating the map database stored in the memory 3. The vehicle interface may allow the processing unit 2 to obtain information from other vehicle systems or vehicle status information via the vehicle interface. The vehicle interface may for example comprise CAN (controller area network) or MOST (Media Oriented devices Transport) interfaces.

The memory 3 stores a map database comprising map data. The map database includes information on links representing road segments and attributes. In the map database, also object data units as explained below may be stored. In other embodiments, object data units may be stored in a separate database in memory 3.

The processor 2 may use the information stored in the map database for performing a route search when a user sets, via the input interface 5, a destination to be reached. The processor 2 may perform the route search independently of the second attributes assigned to lanes. The processor 2 may control the outputting of route guidance information.

Generally, various attributes may be assigned to links and stored in the map database. The attributes may include information on starting and end points of links or other information related to map topology. Such attributes may be stored in a data structure having a pre-defined number of data fields which is respectively provided for each link or other map feature stored in the map database. In addition, attributes may be selectively assigned to links, or other features, only when present on the respective link.

The map database stored in the memory 3 may include different logical layers. Additionally, the map database may be split into different blocks which are associated with different update regions or tiles of a tiling. Such a structure facilitates performing updates. This is particularly desirable for performing updates of the map database to adjust the map database to local changes in a road network. Such updates may then be performed by updating only the update regions or tiles affected by changes in the road network. This allows the updates to be more readily performed in a more time-efficient manner or as over-the-air updates.

As mentioned above, the map database or, in some embodiments, a separate database may store various object data units comprising information, i.e. data, usable for a perspective displaying of objects associated with the respective object data units, for example buildings. With a perspective displaying of objects, a three-dimensional impression may be generated. As will be explained in further detail in the following, at least some of the object data units comprise an adjustable height parameter for adjusting a height of the respective object.

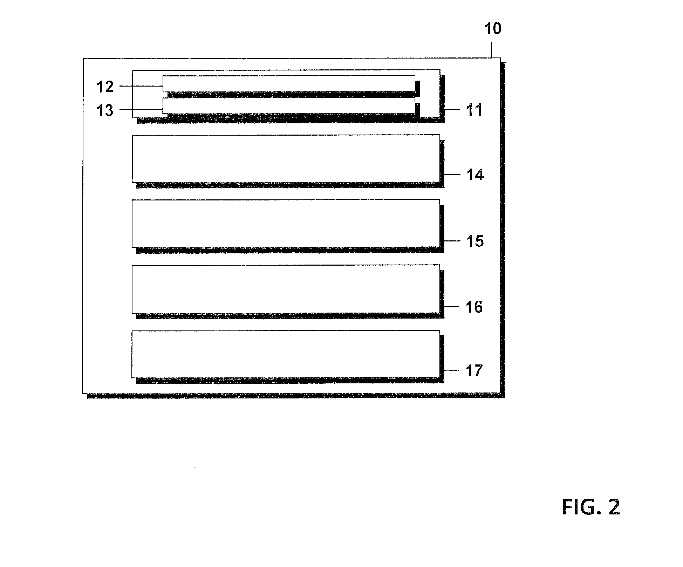

Fig. 2 is a schematic representation of a map database 10 according to an embodiment. A map database 10 having the structure explained in the following may be stored in the memory 3 of the vehicle navigation device 1.

The map database 10 includes a plurality of layers 11 and 14 which include a routing layer 11 and a guidance layer 14. The routing layer 11 includes the information required for performing route searches. This information may include information on the topology of the road network, such as starting points and end points of links. The information in the routing layer 11 may further include costs associated with links for various cost models. The information in the routing layer 11 may further include attributes which allow the costs of links to be adjusted in a route search based on prefer or avoid options.

In the routing layer 11, there may be different levels 12, 13 which include data representing the road network to different levels of details. For illustration, while all road segments of the road network may be present at the level 13, some of the road segments may be omitted at a higher level 12.

The guidance layer 14 includes data required for route guidance. The guidance layer 14 may in particular include data required for optical and/or audio output of guidance information. For example, guidance 14 may comprise the above-mentioned object data units or references thereto. The guidance layer may also include a level structure, with the data in the different levels representing the road network and/or road surroundings to different levels of details.

The routing layer 11 and the guidance layer 14 may be configured as separate tables stored in a memory. For illustration rather than limitation, the routing layer 11 may be a table in a SQL database, and the guidance layer 14 may be another table in the SQL database.

The map database 10 may include additional layers 15-17. A name layer 15 includes references to road names, house numbers or similar. A truck layer 16 may include specific attributes for trucks or lorries. An Advanced Driver Assistance System (ADAS) layer 17 may include data for Advanced Driver Assistance. Additional or alternative layers may be provided, such as a layer for points of interest, a layer for phonetic representations, or a layer for basic map display.

The map database 10 may have a structure as defined by the Navigation Data Standard (NDS).

The use of object data units with adjustable height parameters will now be described in some more detail.

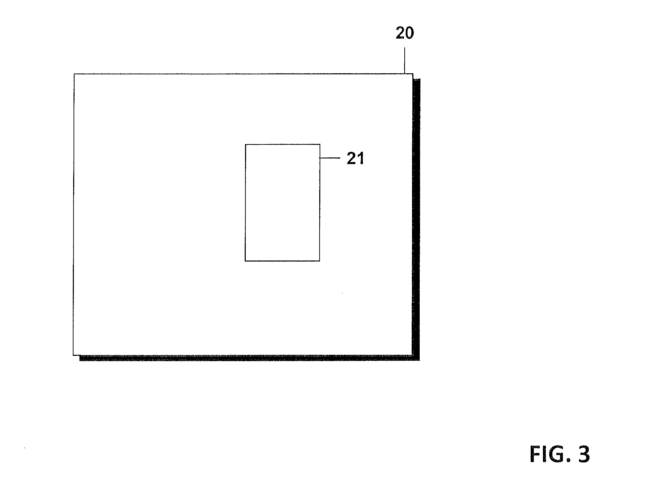

In Fig. 3, an object data unit 20 is schematically shown. Object data unit 20 contains information for a perspective displaying of an object associated with object data unit 20, for example a building, a hill, a tree or any other type of scenery. For example, object data unit 20 may contain coordinates for displaying the object, colours for displaying the object and/or textures for displaying the object or links thereto.

As mentioned, object data units like object data unit 20 of Fig. 3 may be stored in a map database like the map database discussed with reference to Fig. 2, for example in guidance layer 14 thereof. In some embodiments, the map database may comprise a table in which the object data units are directly stored, while in other embodiments such a table may comprise pointers to storage locations of the actual object data units in a memory. In this case, the memory where the object data units are stored together with the database structure comprising the tables for the complete database. Object data unit 20 may for example also be stored in a separate database where various 3D building blocks for displaying a scenery on a display of a navigation device are stored, for example in form of tables. Such a database may be implemented in accordance with the NDS standard.

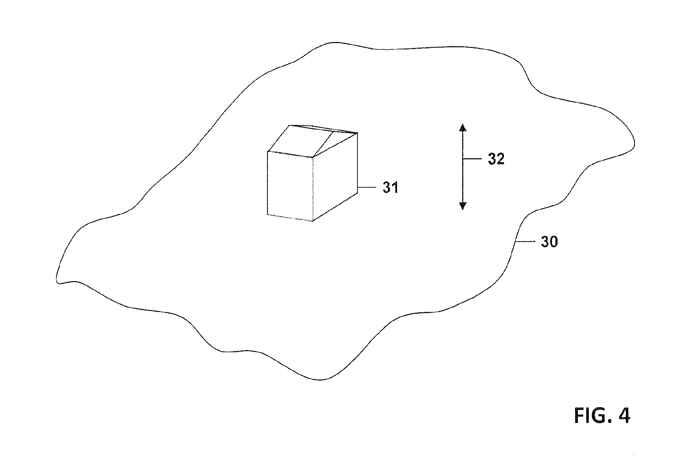

Object data unit 20 as already mentioned above comprises a height adjustment parameter 21 with which the height of the associated object when displaying the object can be adjusted. This will now be explained with reference to Fig. 4.

In Fig. 4, a building 31 is shown as an example for an object which is standing on a ground 30. The necessary information for displaying building 31, for example coordinates of vertices of building 31, may be stored in an object data unit like object data unit 20 of Fig. 3. By adjusting a height parameter of the object data unit like height parameter 21 of Fig. 3, building 31 may be moved up and down as indicated by an arrow 32.

An adjustment of the height parameter and therefore of the height of building 31 may in particular be done depending on a level of detail of ground 30. In navigation devices, various levels of details of a representation may be used, for example based on a scale of the displayed landscape or based on a user selection. Depending on the level of detail, the exact height level of ground 30 may vary. For example, when going to a lower level of detail certain vertices used for forming an elevation on ground 30 may be omitted, which generally lowers the height level of ground 30. In such a case, the height parameter of the data object unit of building 31 may be adjusted such that building 31 is still displayed as standing on the ground regardless of the level of detail used.

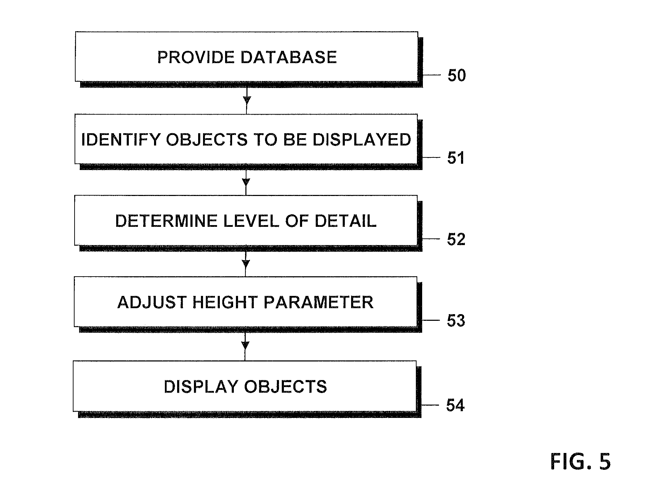

In Fig. 5 a flow-chart illustrating a method according to an embodiment is shown. The method shown in Fig. 5 may for example be implemented in the navigation device of Fig. 1, but may also be implemented independently thereof. It should be noted that various actions and operations described in Fig. 5 need not necessarily be performed in the order shown, but parallel processing of certain operations or in some cases also reversed orders are also possible.

At 50 in Fig. 5, a database comprising object data units as described above is provided, for example the database shown Fig. 2 or any other of the above-described databases. At least some of the object data units comprise an adjustable height parameter.

At 51, objects to be displayed are identified, for example based on a current position of a navigation device and a direction in which the navigation device is moving, such that the surroundings of the navigation device in the direction the navigation device (and therefore for example a car implementing the navigation device) is moving may be shown.

At 52, a level of detail for displaying a landscape, comprising the objects identified at 51 is determined. As explained with reference to Fig. 4, the level of detail used may determine an exact height level of a ground displayed.

At 53, the height parameter of one or more objects to be displayed is adjusted depending on the determined level of detail to ensure that the objects are correctly placed with respect to the ground, for example buildings being placed on the ground at the corresponding location of the building. It should be noted that in other embodiments the level of detail may be fixed, and the height parameter may be adjusted depending on the (fixed) ground level at a certain position.

At 54, the objects are displayed corresponding to the information found in the associated object data units, for example the adjusted height parameters.

It should be noted that an adjustable height parameter like height parameter 21 may be provided to all object data units like object data unit 20 of a corresponding database, but may also provided only to one or to some object data units in other embodiments.

## Claims

1. A vehicle navigation device (1), comprising:
a database (10) comprising object data units (20), said object data units (20) comprising information for a three-dimensional displaying of respective objects, at least one of the object data units (20) further comprising an adjustable height parameter (21) for adjusting a height of the respective object, and
a processing unit (2) configured to cause an output interface (4) to display an object (31) based on a corresponding object data unit (20) of said object data units (20) and the adjustable height parameter (21) of the corresponding object data unit (20).

2. The vehicle navigation device (1) of claim 1,
wherein, said processing unit (2) is further configured to adjust said adjustable height parameter depending on a ground level of a location where the object (31) is to be displayed.

3. The vehicle navigation device (1) of claim 2,
wherein said processing unit (2) is further configured to determine said ground level based on a level of detail of a landscape to be displayed, the landscape comprising said object (31).

4. The vehicle navigation device (1) of any one of claims 1 to 3, wherein said object data units (20) are stored in said database (10) in the form of a table.

5. The vehicle navigation device (1) of any one of claims 1 to 4, wherein said object data units (20) are associated with a specific layer (15) of a plurality of logical layers (11-17) of said database.

6. The vehicle navigation device (1) of any one of claims 1 to 5, wherein said database (10) further comprises map data.

7. A method, comprising:
providing a database (10) comprising object data units (20), said object data units (20) comprising information for a three-dimensional displaying of said objects, at least one of the object data units (20) comprising an adjustable height parameter (21) for adjusting a height of the respective object,
identifying objects to be displayed,
and displaying the identified objects (31) according to the corresponding object data units (20) and the adjustable height parameter (21).

8. The method of claim 7, further comprising adjusting the adjustable height parameter (21) depending on a ground level of a location where a corresponding object (31) is to be displayed.

9. The method of claim 8, wherein adjusting the height parameter comprises adjusting the height parameter depending on a level of detail to be used for displaying a landscape comprising the identified objects.

10. The method of any one of claims 7 to 9, wherein providing the database (10) comprises providing the database (10) with a table storing the object data units.

11. The method of any one of claims 7 to 10, wherein identifying the objects to be displayed comprises identifying the objects depending on a position of a navigation device (1).
